# EUROPEAN PATENT SPECIFICATION

(11) **EP 1 446 301 B1**
(45) Date of publication and mention of the grant of the patent: **27.12.2006**
(21) Application number: 02770022.8
(22) Date of filing: 28.10.2002
(51) Int. Cl.: B60J 7/12, B60P 7/04

(54) **VEHICLE DECK COVER DEVICE FOR COVERING THE LOAD**
FAHRZEUGDECK-ABDECKVORRICHTUNG ZUR ABDECKUNG DER LAST
DISPOSITIF DE RECOUVREMENT DE PLATE-FORME DESTINE A RECOUVRIR LE CHARGEMENT D'UN VEHICULE

(30) Priority: 29.10.2001 FI 20015033
(43) Date of publication of application: 18.08.2004
(73) Proprietor: MULTILIFT OY, 21201 Raisio (FI)
(72) Inventor: SEPPÄLÄ, Teijo, FIN-40740 Jyväskylä (FI)
(74) Representative: Helke, Kimmo Kalervo
(86) International application number: PCT/FI2002/000836
(87) International publication number: WO 2003/037670

(56) References cited:
- EP-A2- 0 906 841
- JP-A- 58 180 335
- US-A- 5 340 187
- US-A- 6 152 516

## Description

The present invention relates to a vehicle deck cover device for covering the load, which includes a supporting frame in front of the deck, equipped with a lifting device, and mounted on the chassis of the vehicle, a covering device supported by the frame, according to the first part of claim 1. The covering device can be either a cover that can be rolled up, or a corresponding foldable cover. In particular, the invention relates to deck covers used in connection with interchangeable skips.

Document US-A-5 340 187 discloses a vehicle deck cover device for covering the load, which includes a supporting frame in front of the deck, equipped with a lifting device, and mounted on the chassis of the vehicle, a covering device supported by the frame, comprising a cover that can either be folded transversely into a bundle or rolled onto a rotating roller and an operating device attached to the free end of the cover for pulling the cover over the deck from the bundle or roll, as well as devices for bundling the cover or rolling it back onto the roller.

US patent publications 4,082,347 (Petretti), 4,157,202 (Bachland), 3,656,802 (White) and 3,515,428 (Killion) disclose cover devices for covering a load, in which the cover is arranged in front of the deck, either rolled up or folded, and from which it is pulled over the deck with the aid of a separate operating device. The operating devices comprise arms at the sides of the deck and drive devices for them. Operationally, such devices have served satisfactorily, but they do not conform to road traffic legislation, especially in Europe. This is because the deck is already the greatest width permitted by legislation, so that such additional arms exceed the maximum permitted width. Thus, in recent years, a need has arisen to find a solution that would conform to road traffic legislation.

As such, cover devices according to the introduction are known, which comprise a cover that is rolled up and is pulled by hand over an interchangeable skip. This, however, is difficult and slow and often even dangerous.

Japanese patent publication JP 20344150 A2 discloses a deck cover device for a truck, which comprises a covering device located at the front of the deck, in which a metal strip framework is rolled up on the roller of the device and can be rolled out over the load. Such a cover is obviously heavy. The solution is totally unsuitable for use in connection with interchangeable skips.

The present invention is intended to create a new type of vehicle deck cover device for covering the load, which will eliminate the defects of the state of the aforementioned known devices and which will be simple and easy to use. The characteristic features of the cover device according to the invention are stated in the accompanying Claim 1.

The scissors devices according to the invention are set horizontally, to save height, but the arms can be placed on two levels, to reduce the length. According to one preferred embodiment, the first arms of the scissors device are pivoted on the supporting frame while synchronizing members, which can be formed of either a geared drive or a chain drive, are arranged between them.

Other advantages and embodiments of the invention are presented later in connection with the examples of applications.

In the following, the invention is examined with reference to the accompanying drawings, which show one deck cover device according to the invention for covering a load.
- Figures 1a and 1b: show the use of the deck cover device in connection with an interchangeable skip.
- Figure 2: shows a side view of the deck cover device.
- Figure 3: shows the deck cover device from directly in front, with the cover device in the lowered position.
- Figure 4: shows the scissors mechanism of the covering device spread open, seen looking downwards from in front.
- Figure 5: shows a side view of the deck cover device and the cover partly spread open.
- Figure 6: shows the pivots between the arms of the scissors device.
- Figure 7: shows the gearing between the first arms.

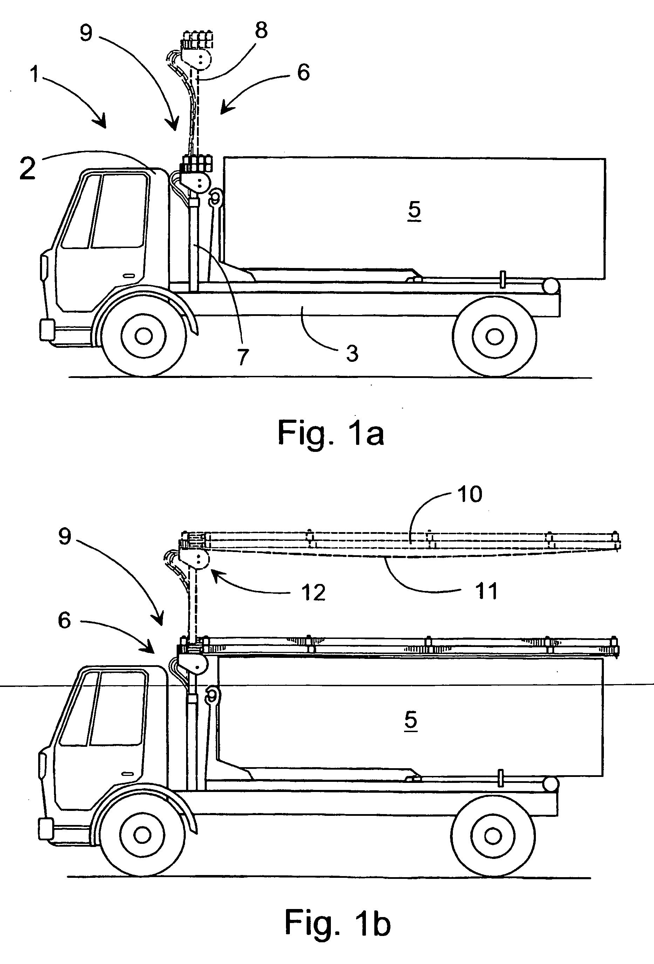

In Figures 1a and 1b, a deck cover device 6 according to the invention is installed in a conventional truck 1, which has a hook device 4 mounted on its chassis 3 for pulling an interchangeable skip 5 into and out of the transportation position. It is essential, that there is space between the hook device 4 and the cab 2, typically 40 - 60 cm. The deck cover device 6, or at least its supporting frame 7, can be installed in this space. In this case, the supporting frame 7 of the deck cover device 6 is supported firmly on the chassis 3 of the vehicle 1. In Figure 1a, the deck cover device 6 is shown folded up and lowered (solid line). The supporting frame 7 includes a telescopic component 8, which can be used to raise the covering device 9 to the desired height (broken line) to extend the scissors device 10.

The scissors device 10 according to Figure 1b is extended above the skip 5 (broken line), so that the cover 11 is run off the roller 12 over the entire length of the skip. Next, the scissors device 10 along with the cover are lowered on top of the edges of the skip 5 (solid line). Alternatively, the attachment 11 at the end of the scissors device 10 is removed, the cover secured suitably to the end of the skip, and the scissors device retracted (not shown).

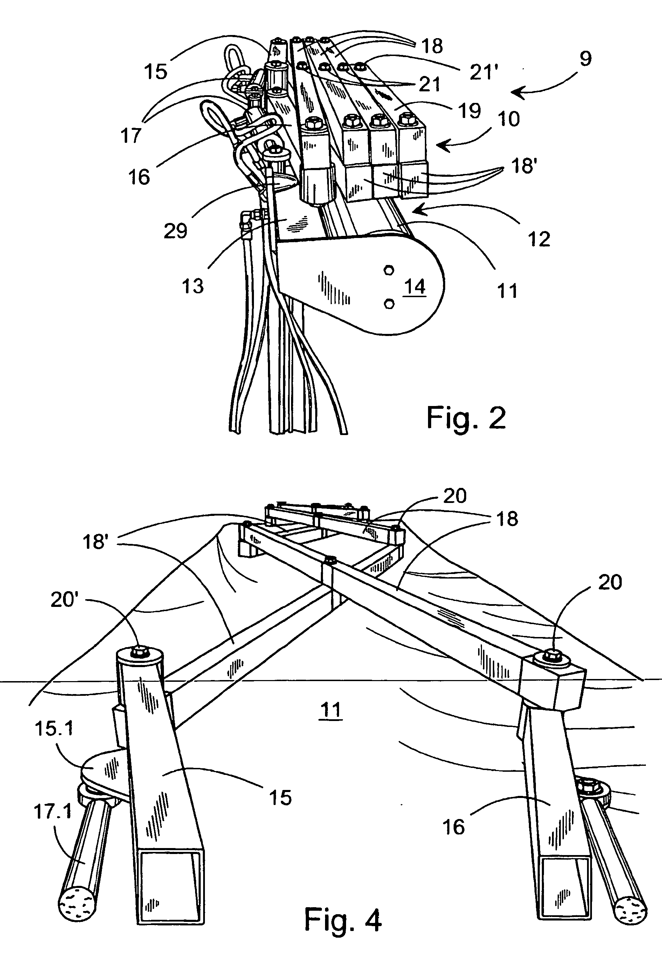

When retracted, the scissors device 10 forms a quite compact bundle, Figure 2. In the case of the scissors device, it should be noted that, in a horizontally arranged scissors device, the parallel arms always turn in overlapping layers. Such parallel pairs are, firstly, the first arms 15 and 16 pivoted to the frame 13, the outer arms 18 and 18', which are pivoted consecutively to their ends and also cross over each other, and so on to the outermost arms 19 and 19' pivoted to them, at the end of which is the outermost pivot point 21', to which the load to be carried, in this case the free end of the cover 11, is attached. With the aid of side plates 14, the frame 13 supports a roller 11 mounted on bearings, as well as a spring mechanism, that is as such known, for rolling the cover 11 back onto the roller. The scissors mechanism is operated with the aid of hydraulic cylinders 17, which turn the first arms 15 and 16 in relation to the frame 13. During retraction, stops 29 soften the stopping of the movement of the arms. For the same reason, so-called end-damped hydraulic cylinders (not shown) are additionally used.

The ends of the arms 15, 16, and 18, 18' preferably rest on a separate frame (not shown) when retracted, to reduce the loading during transport. In this case, all the arms are of the same depth. In one variation, the arms become shallower towards their ends (not shown), in the manner of a optimal cantilever.

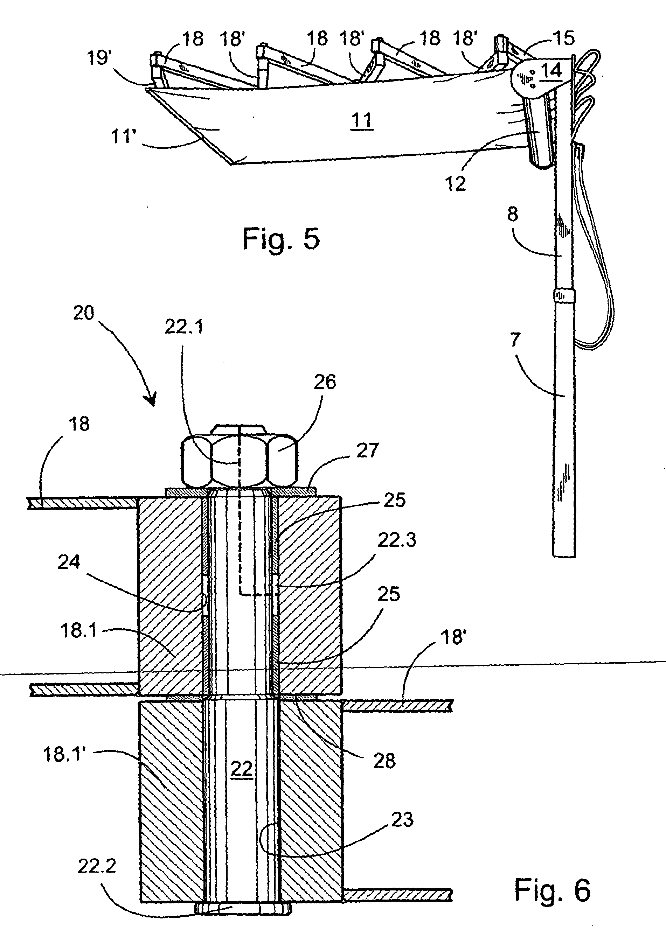

In Figure 4, the cover 11 has been pulled open and the scissors devices fully extended. Even in the extended position, the pivots 20 and 20' remain at a distance to each other, preserving the horizontal rigidity of the scissors device. Its vertical rigidity depends mainly on the arms having a sufficient overall depth.

In this case, a reach of more than 8 metres is achieved by using an arm with a length of 205 cm (between the pivot points). The 255-cm maximum vehicle width can be exploited to give the arms an effective length of 245 cm. As interchangeable skips are usually only 6-m long, there can be one less pair of arms, compared to the above example.

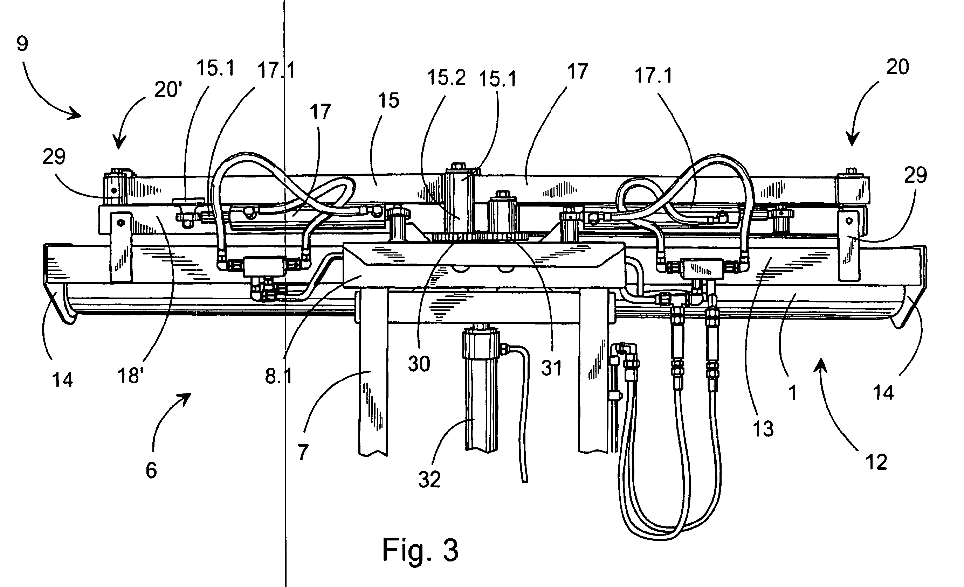

Figure 3 shows the covering device 9 installed on top of the supporting frame 7. The telescopic component is carried on a transverse bed 8.1, to which the beam forming the frame 13 of the covering device is welded. The telescopic component is operated by a hydraulic cylinder 32. The operating devices of the hydraulic cylinder are not shown.

The first arms 15 (left) and 16 (right) of the scissors mechanism are securely pivoted to the support frame in pivot bushings 15.1 and 16.1. The pivot construction in these is of the same type, but sturdier than, the pivots between the arms, described later. Firstly, it is essential that the arms 15 and 16 are arranged to turn to different levels. The pivot bushing 15.1 of the arm 15 includes a raising bush 15.2. Due to this, all the subsequent arms are also in pairs on different levels. Secondly, the pivot bushings 15.1 and 16.1 include gear wheels 30 ad 31, which transmit power to one another. This synchronizes the arms 15 and 16, and thus ensures that the extension movement of the scissors device 10 always takes place parallel to the length of the vehicle.

According to Figure 5, the free edge of the cover 11 incorporates a rigid transverse strip 11'. In addition, there are cables (not shown) at the sides of the cover, which provide stiffness and help to keep the cover straight as it rolls out.

Reliable pivoting between the arms is of primary importance for the operation of the device. Figure 6 shows one preferred manner of pivoting and depicts the pivot 20 (of which the pivot 20' is a mirror image) between the arms 18 and 18'. Similar pivots are also used both between the arms (pivots 21) and between the first arms and the frame. The arms 18 and 18' are mainly formed from steel or aluminium profile (e.g., 60 x 80 mm, wall thickness 5 mm). Solid metal pieces 18.1, 18.1', in which bores 23 and 24 are drilled, are welded to their ends. A pivot pin 22 is crimped to the lower piece 18.1'. Bearing sleeves 25, which fit the narrowed upper end 22.3 of the pin 22, are set into the upper piece 18.1. A pivot permitting rotation (and the necessary tolerance) is thus formed only in the upper piece. At the lower end of the pin 22, there is a thin flange 22.2 while the upper end is threaded for a lock nut 26. There is a washer 28 between the arms and a washer 27 under the nut 26. Each pin 22 includes a grease nipple and channel, which are shown diagrammatically with the reference number 22.1.

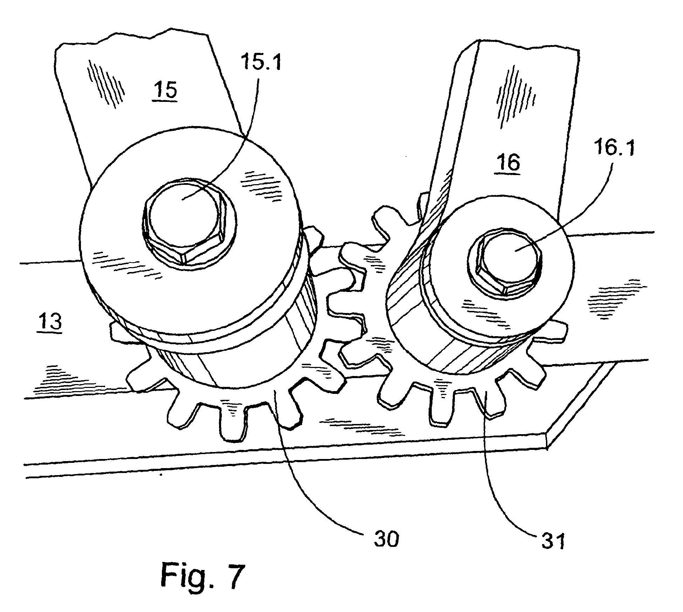

Synchronization between the first arms 15 and 16 is essential for the operation of the device. Figure 7 shows details of the gearing described above. A gear wheel 30 is attached to the arm 15 and correspondingly a gear wheel 31 is attached to the arm 16, both being pivoted to the frame 13. The gear wheels 30 and 31 are in contact with each other.

Several variations of this power transmission can be disclosed. In one embodiment, it is wished to increase the distance between the pivot points of the arms, to allow the first arms to be lowered beneath the hook (the cover having an opening or flap for this purpose). A common gearing of two (or four) gear wheels can be installed between the gear wheels of the first arms. As the distance increases, chain transmission also becomes possible. If the sprockets of the arms are set to slant slightly, the chain can be placed in a figure of eight around the pivots. Thus, the parts of the chain will travel at different heights at the crossover point.

A third synchronization alternative is the use of a so-called synchronization arm, which is used, for example, in a timber grab.

## Claims

1. A vehicle deck cover device (6) for covering the load, which includes a supporting frame (7) in front of the deck, equipped with a lifting device, and mounted on the chassis (3) of the vehicle, a covering device (9) supported by the frame, comprising a cover (11) that can either be folded transversely into a bundle or rolled onto a rotating roller (12), and an operating device (10) attached to the free end of the cover (11) for pulling the cover (11) over the deck from the bundle or roll, as well as devices for bundling the cover or rolling it back onto the roller (12), **characterized in that** the operating device comprises a horizontal scissors mechanism (10) equipped with drive devices, the fixed end of which being supported on the supporting frame (7) and the opposite end being attached to the free end of the said cover (11).

2. A cover device (6) according to Claim 1, **characterized in that** the scissors mechanism (10) includes first arms (15, 16) pivoted to the supporting frame (7) and pivoted arms (18, 18', 19, 19') consecutively pivoted to them, of which the parallel pairs of arms (18, 18') are further pivoted together crosswise.

3. A cover device according to Claim 2, **characterized in that** the scissors mechanism (10) includes synchronization members for holding the direction of movement parallel to the longitudinal direction of the deck.

4. A cover device according to Claim 3, **characterized in that** the synchronization members comprise power transmission gearing connected to the pivoting (15.1, 16.1) between the first arms (15, 16) and the supporting frame (7), by means of which the rotation of the first arms (15, 16) is connected to each other.

5. A cover device according to Claim 4, **characterized in that** the power transmission gearing comprises gear wheels (30, 31) located on the ends of the first arms on the supporting-frame side and connected to each other.

6. A cover device according to Claim 4, **characterized in that** the power transmission gearing comprises a chain drive arranged between the supporting-frame side ends of the first arms.

7. A cover device according to any of Claims 1 - 6, **characterized in that** the right and left-hand side arms (15, 16, 18, 18', 19, 19') of the scissors mechanism (10) are placed at different horizontal levels and that they are arranged to overlap each other in the longitudinal direction.

8. A cover device according to Claim 7, **characterized in that** the arms of the scissors mechanism (10) are of rectangular profiles, with a width that is 50 - 80 %, preferably 55 - 75 % of their depth.

9. A cover device according to any of Claims 1 - 8, **characterized in that** the drive device of the scissors mechanism (10) comprises at least one operating cylinder (17), driven by a medium, which is arranged to turn the first arm (15, 16).

## Patentansprüche

1. Für Fahrzeugpritschen bestimmte, zum Abdecken der Ladung dienende Abdeckvorrichtung (6), welche einen vor der Pritsche angeordneten, am Fahrzeugrahmen (3) abgestützten und mit Hubvorrichtung versehenen Tragrahmen (7), eine an diesem abgestützte Abdeckung (9) bestehend aus einer quer zu einem Bündel zusammenfaltbaren oder auf eine rotierende Rolle (12) aufrollbaren Plane (11), und eine ans freie Ende der Plane (11) gefügte Betätigungsvorrichtung (10) zum Ziehen der Plane (11) von dem Bündel bzw. der Rolle über die Pritsche sowie Mittel zum Zusammenfalten bzw. Wiederaufrollen der Plane auf die Rolle (12) umfasst, **dadurch gekennzeichnet, dass** die Betätigungsvorrichtung aus einem mit Antriebsvorrichtung versehenen horizontalen Scherenmechanismus (10) besteht, dessen festes Ende am Tragrahmen (7) abgestützt und dessen entgegengesetztes Ende am freien Ende der besagten Plane (11) befestigt ist.

2. Abdeckvorrichtung (6) nach Anspruch 1, **dadurch gekennzeichnet, dass** der Scherenmechanismus (10) an den Tragrahmen (7) angelenkte erste Arme (15, 16) und an diese hintereinander angelenkte Arme (18, 18', 19, 19') umfasst, wobei die parallelen Armpaare (18, 18') noch kreuzweise miteinander gelenkig verbunden sind.

3. Abdeckvorrichtung nach Anspruch 2, **dadurch gekennzeichnet, dass** der Scherenmechanismus (10) Synchronisierelemente hat, welche seine Bewegungsrichtung parallel zur Längsrichtung der Pritsche halten.

4. Abdeckvorrichtung nach Anspruch 3, **dadurch gekennzeichnet, dass** die Synchronisierelemente ein der gelenkigen Verbindung (15.1, 16.1) zwischen den ersten Armen (15, 16) und dem Tragrahmen (7) zugeordnetes Getriebe umfassen, durch welches die ersten Arme (15, 16) in ihrer Schwenkbewegung miteinander gekoppelt sind.

5. Abdeckvorrichtung nach Anspruch 4, **dadurch gekennzeichnet, dass** das Getriebe Zahnräder (30, 31) umfasst, die an den tragrahmenseitigen Enden der ersten Arme angeordnet und miteinander gekoppelt sind.

6. Abdeckvorrichtung nach Anspruch 4, **dadurch gekennzeichnet, dass** das Getriebe einen Kettentrieb zwischen den tragrahmenseitigen Enden der ersten Arme umfasst.

7. Abdeckvorrichtung nach irgendeinem der Ansprüche 1 bis 6, **dadurch gekennzeichnet, dass** die rechten und die linken Arme (15, 16, 18, 18', 19, 19') des Scherenmechanismus (10) in verschiedenen Ebenen angeordnet und dazu eingerichtet sind, sich in Längsrichtung zu überlappen.

8. Abdeckvorrichtung nach Anspruch 7, **dadurch gekennzeichnet, dass** die Arme des Scherenmechanismus (10) aus Rechteckprofilen bestehen, deren Breite 50 B 80 %, bevorzugt 55 B 75 % ihrer Höhe beträgt.

9. Abdeckvorrichtung nach irgendeinem der Ansprüche 1 bis 8, **dadurch gekennzeichnet, dass** die Antriebsvorrichtung des Scherenmechanismus (10) wenigstens einen von einem Medium angetriebenen Arbeitszylinder (17) umfasst, der zum Schwenken des ersten Armes (15, 16) dient.

## Revendications

1. Dispositif de couverture de benne de véhicule (6) pour couvrir le chargement, qui inclut une armature de soutien (7) à l'avant de la benne équipée d'un dispositif de levage et montée sur le châssis (3) du véhicule, un dispositif de couverture (9) soutenu par l'armature, comportant une couverture (11) qui peut être repliée transversalement ou roulée sur un rouleau rotatif (12), et un dispositif de manoeuvre (10) fixé à l'extrémité libre de la couverture (11) pour tirer ou dérouler la couverture (11) sur la benne, ainsi que des dispositifs pour replier ou enrouler la couverture sur le rouleau (12), **caractérisé par le fait que** le dispositif de manoeuvre comporte un mécanisme horizontal de ciseaux (10) équipé de dispositifs d'entraînement, dont l'extrémité fixe est soutenue par l'armature de soutien (7) et l'extrémité opposée est attachée à l'extrémité libre de ladite couverture (11).

2. Dispositif de couverture (6) selon la revendication 1, **caractérisé par le fait que** le mécanisme de ciseaux (10) inclut les premiers bras (15, 16) pivotant sur l'armature de soutien (7) et les bras pivotant (18, 18 ', 19, 19') pivotant consécutivement sur ceux-ci, et dont les paires parallèles de bras (18, 18') pivotent en outre ensemble transversalement.

3. Dispositif de couverture selon la revendication 2, **caractérisé par le fait que** le mécanisme de ciseaux (10) inclut des éléments de synchronisation pour maintenir la direction du mouvement parallèle au sens longitudinal de la benne.

4. Dispositif de couverture selon la revendication 3, **caractérisé par le fait que** les éléments de synchronisation comportent un engrenage de transmission de puissance relié au pivotement (15.1, 16.1) entre les premiers bras (15, 16) et l'armature de soutien (7), lequel engrenage permet de relier entre eux la rotation des premiers bras (15, 16).

5. Dispositif de couverture selon la revendication 4, **caractérisé par le fait que** l'engrenage de transmission de puissance comporte les roues dentées (30, 31) placées aux extrémités des premiers bras du côté de l'armature de soutien et reliées entre elles.

6. Dispositif de couverture selon la revendication 4, **caractérisé par le fait que** l'engrenage de transmission de puissance comporte une transmission à chaînes disposée entre les extrémités du côté de l'armature de soutien des premiers bras.

7. Dispositif de couverture selon l'une quelconque des revendications 1 - 6, **caractérisé par le fait que** les bras latéraux droits et gauches (15, 16, 18, 18 ', 19, 19') du mécanisme de ciseaux (10) sont placés à différents niveaux horizontaux et qu'ils sont disposés pour se chevaucher dans le sens longitudinal.

8. Dispositif de couverture selon la revendication 7, **caractérisé par le fait que** les bras du mécanisme de ciseaux (10) sont de profil rectangulaire, avec une largeur correspondant à 50 - 80 %, et selon un mode de réalisation avantageux de l'invention, à 55 - 75 %, de leur hauteur.

9. Dispositif de couverture selon l'une quelconque des revendications 1 - 8, **caractérisé par le fait que** le dispositif d'entraînement du mécanisme de ciseaux (10) comporte au moins un cylindre de manoeuvre (17), actionné par un milieu quelconque, qui est prévu pour faire tourner le premier bras (15, 16).
